# EUROPEAN PATENT APPLICATION

(11) **EP 2 615 830 A1**
(43) Date of publication of application: **17.07.2013**
(21) Application number: 12150801.4
(22) Date of filing: 11.01.2012
(51) Int. Cl.: H04N 7/18, G06T 7/20

(54) **Method to track an object in a defined space**

(71) Applicant: Adec Technologies AG, 6300 Zug (CH)
(72) Inventor: Hegner, Robert, 8640 Rapperswil (CH); Hartmann, Andreas, 7000 Chur (CH)
(74) Representative: Frischknecht, Harry Ralph

(57) **Abstract**

Method for tracking an object (1) in a defined space (2) with at least two tracker units (ET1, ET2, ET3), each of said tracker units (ET1, ET2) comprises an optical element (3) having a determined field of view and a data acquisition unit (4) to locate said object (1) and acquire data (D) of the object (1) within said space (2). Each of said field of view defines a sub-space (5, 6, 7) in said space (2), said space itself is provided by an aggregation of said field of views or said sub-spaces (5, 6, 7), respectively. Said method comprises the steps of acquiring data (D) of the object (1) to be tracked by means of said data acquisition unit (4). Said tracker units (ET1, ET2, ET3) are connected with each other by means of a data connection (9) and each of said tracker units (ET1, ET2, ET3) further comprises a processing module (10) to process said data (D) acquired by the respective tracker unit (ET1, ET2, ET3), in particular by said data acquisition unit (4). Said method further comprises the steps of:
- processing said acquired data (D) by said processing modules (10) in order to obtain or to update track data (T) referring to track properties of said object (1) to be tracked;
- transmitting said track data (T) from the current tracker unit (ET2) monitoring the object (1) to at least one of the future tracker units (ET1, ET3) such that the said future tracker unit(s) (ET1, ET3) will be provided with said track data (T) once the object (1) enters into a space of interest (11, 12, 21, 22, 31, 32).

## Description

### TECHNICAL FIELD

The present invention relates to a method to track an object by means of tracker unit according to the preamble of claim 1 and to a system for using said method according to claim 15.

### PRIOR ART

US 2006/279630 shows a system for detection, tracking and immersive visualization of a cluttered and crowded environment. An object to be tracked will be monitored by several cameras and the information concerning the track of said object, such as the location, will be stored in a central track database.

A main disadvantage of the system according to US 2006/279630 is that in some of the environments the data volume can not be processed accordingly which may lead to a loss of the object to be tracked. In particular in complex environments this loss of the object occurs since in such environments the data to be processed comes along with a rather large amount of data.

### SUMMARY OF THE INVENTION

It is therefore an object of the present invention to provide a method as well as device which do not have the drawbacks of the methods and devices of prior art.

Such an object is solved by a method according to claim 1. Claim 1 defines a method for tracking an object in a defined space with at least two tracker units, each of said tracker units comprises an optical element having a determined field of view to locate or to detect said object and a data acquisition unit to locate said object and to acquire data of the object within said space. Each of said field of view defines a sub-space in said space, said space itself is provided by an aggregation of said field of views or said sub-spaces, respectively. Said method comprises the step of acquiring data of the object to be tracked by means of said tracker units, in particular by a current tracker unit. Said tracker units are connected with each other by means of a data connection and each of said tracker units further comprises a processing module to process said data acquired by the respective tracker unit, in particular by said data acquisition unit. Said method further comprises the steps of:
- processing said acquired data by said processing modules in order to obtain or to update track data referring to track properties of said object to be tracked;
- transmitting said track data from the current tracker unit monitoring the object directly to at least one of the future tracker units such that the said future tracker unit(s) will be provided with said track data once the object enters into a space of interest.

With such a method a very effective solution can be provided in terms of the data volume to be transferred. As the track data will be submitted directly to the future tracker units there is no bottle neck at a central server.

Preferably each of the sub-spaces comprises a determined space of interest, in particular for each tracker unit whose field of view is adjacent to its own field of view and in that the step of transmitting said track data between said tracker units such that the tracker units will be provided with said track data is executed once the object enters into said space of interest. Hence the data traffic can be reduced furthermore.

Preferably the physical arrangement of said tracker units with respect to each other is such that said field of views of said tracker units overlap in overlapping spaces and/or said field of views of said tracker units are substantially adjacent to each other or directly adjacent to each other, and/or said field of views of said tracker units are arranged at a distance to each other.

Preferably the space of interest is defined by
- an overlap space provided by neighbouring and partly overlapping sub-spaces; or
- a space provided by a first space that is defined by neighbouring and partly overlapping sub-spaces and by a second space that is defined by a space encompassing said first space and is part of said respective sub-space; or
- a space that is part of an overlap space provided by neighbouring and partly overlapping sub-spaces but is smaller than said overlap space; or
- a space congruent to said sub-spaces; or
- a space surrounding the outer border of said sub-spaces but that is part of the subspace; or
- a space surrounding the outer border of neighbouring and partially overlapping space but is part of said sub-space.

Preferably the step of transmitting said track data between said tracker units such that the tracker units will be provided with said track data is executed continuously at regular time intervals as long as the object is in the area of interest or in the sub-space or in said field of view.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic view of a system which can be operated according to a method of the present invention;
- Fig. 2: shows a further schematic view of a system which can be operated according to a method of the present invention; and
- Fig. 3a to 3f: show different embodiments of space of interest which are of use by performing said method according to the present invention.

### DESCRIPTION OF PREFERRED EMBODIMENTS

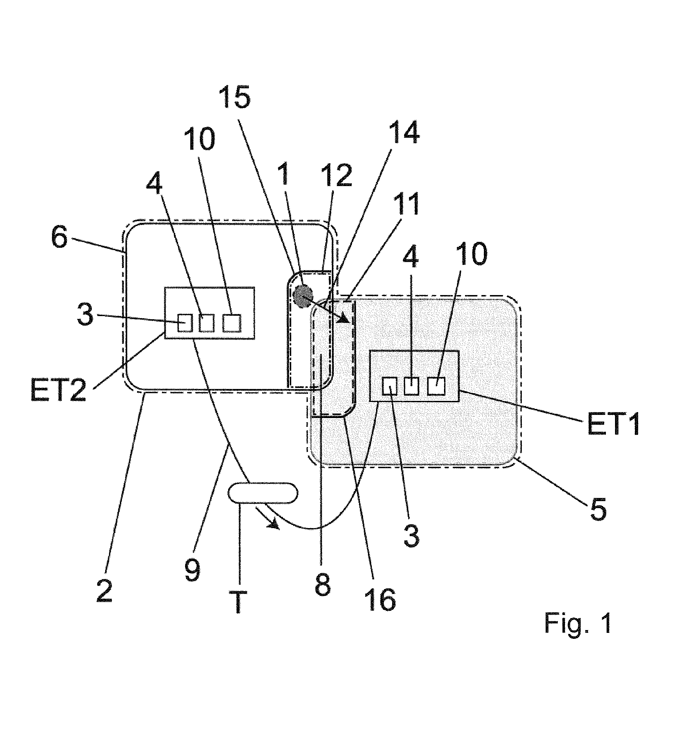

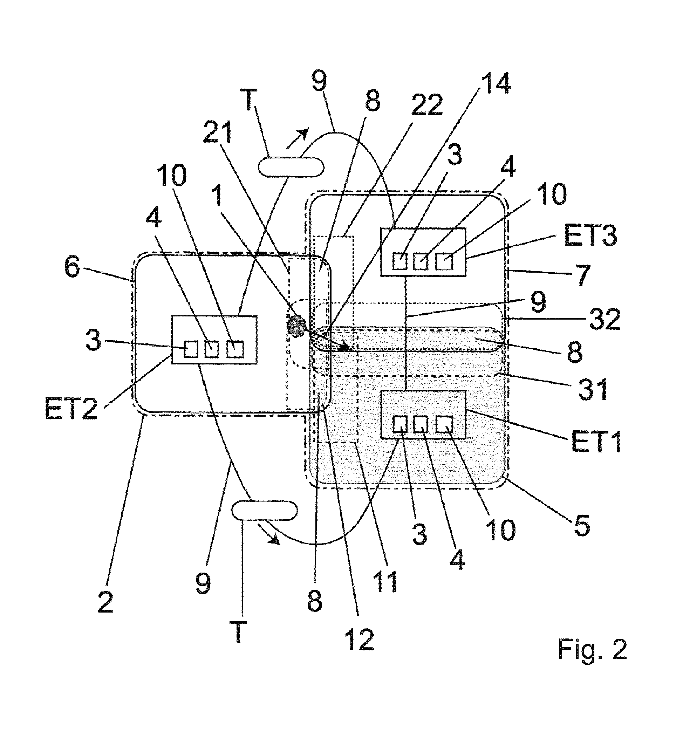

Figure 1 shows a first embodiment of an exemplary system which can be operated in accordance with a method according to the present invention and figure 2 shows a second embodiment. The method as described in the following is a method for tracking an object in a defined space 2 by means of two or more tracker units. The defined space 2 can be any space such as public places for example an airport hall, a railway hall, a shopping center, a street or a private place such as a private property or a manufacturing hall. The term tracker unit includes all devices which are suitable for such a use. Each of said tracker units ET1, ET2, ET3 comprises of an optical element 3 having a determined field of view, such as a camera, able to obtain information from within its field of view which, using a data acquisition unit 4, can be used to locate one or more object of interest. The location and other properties of said object is managed in the processing module 10.

The system according to figure 1 comprises a first tracker unit ET1 and at least one further tracker unit ET2, here a second tracker unit ET2. The number of tracker units is not limited and depends solely on the field of view of the tracker units as well as on the area or space to be monitored. In the system according to figure 2 a third tracker unit ET3 is added which leads to an extension of the space 2 to be monitored.

Each of said field of view of each of said tracker units ET1, ET2, ET3 defines a sub-space 5, 6, 7 in said space 2. This means that said defined space 2 is provided by an aggregation of said sub-spaces which are defined by said field of views of each of the tracker units ET1, ET2, ET3.

In other words with regard to figure 1: Tracker unit ET2 monitors the object in one field of view. Said field of view that is monitored by tracker unit ET2 defines the sub-space 6. Tracker unit ET1 monitors also a specific field of view which defines the sub-space 5. Hence one can also say that the field of view of the respective tracker unit ET1, ET2 is congruent with said sub-space 5, 6. The sum of the sub-spaces 5, 6 results then in said defined space 2. The same applies also to the sum of the fields of view which also result in said defined space 2.

The expression "space" as mentioned herein is preferably a three-dimensional space. However, in other embodiment it is also possible to apply the technical teaching to a two-dimensional setting which means that the space is rather an area than a space. The term space as used herein is therefore to be understood as three-dimensional space or two-dimensional area.

Said field of views of said tracker units ET1, ET2, ET3 preferably overlap in overlapping spaces or regions 8 as it can be seen in figure 1 and 2. An overlap is needed when it shall be prevented that areas or spaces within said defined space 2 are not covered by the tracker units ET1, ET2, ET3. The term overlap is to be understood that the field of view of the tracker unit ET1 extends into the field of view of the tracker unit ET2. The degree of the extension compared with the whole field of view can be relatively small or even very marginal. In latter case one can also say that the field of views of neighbouring tracker units are adjacent rather than overlapping. However, it would also be possible to operate a system according to a method as described herein in case there would be a gap between the field of views of neighbouring tracker units ET1, ET2, ET3.

Each of the tracker units ET1, ET2, ET3 comprises a data acquisition unit 4 which uses the raw data obtained by the optical element 3 to acquire data D for all objects 1 in its field of view, i.e. their location and other object properties. Furthermore each of the tracker units ET1, ET2, ET3 comprises a processing module 10 to keep track of all the objects, such as object 1 and their properties within the field of view. The processing module also generates and uses, from other ETs, track data T which is exchanged whenever the object 1 moves within one or more spaces of interest.

The tracker units ET1, ET2, ET3 are connected with each other by means of a data connection 9. Said data connection 9 serves to exchange data T between the tracker units. The data connection 9 can be a physical data connection, such as a Local Area Network LAN, or a wireless data connection, such as a Wireless Local Area Network. The use of other networks is also possible.

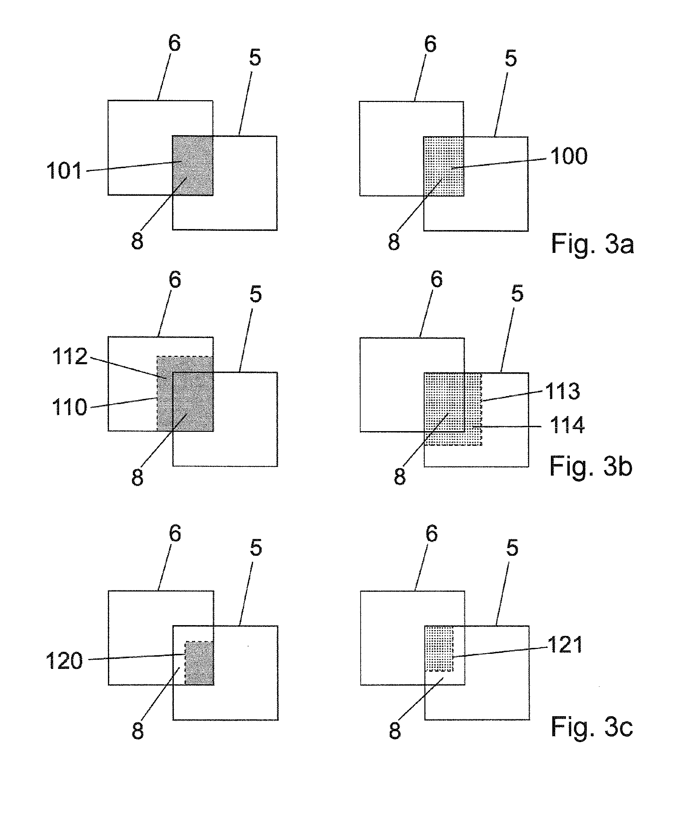

Additionally a space of interest is assigned or allocated to each of the tracker units ET1, ET2, ET3 for each adjacent sub-space. Said space of interest 11, 12, 21, 22, 31, 32 is relevant for the method as it is described below. The space of interest 11, 12, 22, 23, 31, 32 is thereby part of the sub-space of the respective tracker unit ET1, ET2, ET3. Preferred embodiments of such space of interests are described below by means of figures 3a to 3e.

The method according to the present invention comprises the following steps of:
- acquiring data D of the object X to be tracked by means of said tracker units ET1, ET2, ET3, in particular by a current tracker unit;
- processing said acquired data D by said processing modules 10 in order to obtain or to update track data T referring to track properties of said object 1 to be tracked;
- transmitting said track data T from the current tracker unit ET2 monitoring the object 1 directly to at least one of the other or future tracker units ET1, ET2, ET3 such that said other or future tracker unit(s) ET1, ET2, ET3 will be provided with said track data T once the object 1 enters into a space of interest 12 or 21 respectively.

The spaces of interest determine at which locations which tracker unit is sending the track data T from object 1 to which of the other tracker units. The tracker unit in the field of view of which the space of interest is located originates the tracker data T, the tracker unit which is associated with the space of interest receives the track data T.

The term directly is to be understood in that track data T will be submitted to the future tracker units without a detour to or via a central server.

The term current tracker unit as used herein refers to the tracker unit(s) that actually track said object. Note that an object may reside in more than one tracker's field of view at any given point in time. The term future tracker unit(s) or other tracker unit(s) as used herein refers to the tracker unit that will monitor the object in the future as the object will enter into the field of view of the future tracker unit.

With reference to figure 1 the method will now be explained in more details. The object 1 is tracked by means of the second tracker unit ET2 which is the current tracker unit and moves along arrow 14. Here the object 1 is within the field of view of the tracker unit ET2 or in the sub-space 6 which is congruent with said field of view. The object 1 moves along arrow 14 towards the sub-space 5 which is defined and monitored by tracker unit ET1. Thereby the first tracker unit ET1 which is the future tracker unit shall be informed about the object 1 that is about to enter into its allocated sub-space 5, preferably before the object 1 is in said sub-space 5. During the presence of object 1 in the sub-space 6 it is tracked by current tracker unit ET2 which acquires data D of the object 1. Said data D is processed by said processing module 10 of tracker unit ET2 such that a set of track data T can be obtained. Once the object 1 enters into the space of interest 12 said track data T will be transmitted to tracker unit ET1. Space of interest 12 is allocated to the tracker unit ET2 and is associated with tracker unit ET1. Thereby the future tracker unit ET1 is informed about the track data T of the object 1 which is about to enter or has already entered in the field of view of the tracker unit ET1, as long as the object 1 remains in space of interest 12

From Figure 1 it becomes evident that the space of interest 12 is allocated to the second tracker unit ET2. Hence the criteria, when the track data T shall be transmitted to the neighbouring tracker unit ET1 is dependent on an internal criteria of the current tracker unit by which the object 1 is monitored. Here by said second tracker unit ET2.

This also means that each sub-space or field of view of a tracker unit or each tracker unit ET1, ET2, ET3, respectively, allocates determined spaces of interest 11, 12, 21, 22, and 31, 32 respectively for each tracker unit whose field of view is adjacent to its own field of view. Therefore the spaces of interest 11, 12, 21, 22, 31 and 32 are preferably defined as being a part of the sub-space 5, 6, 7 that is allocated to a respective tracker unit ET1, ET2, ET3. With regard to figure 1 this means that in case the object 1 enters into a space of interest 12 that is allocated to the tracker unit ET2 and the respective sub-space 6 the neighbouring tracker unit ET1 will be informed, although the object did not already enter into the field of view the tracker unit ET1 in which field of view the object X, 1 is about to enter. Tracker unit ET1 will therefore be informed beforehand.

This method is advantageous as the tracker units communicate with each other directly and that said track data T is not transmitted to a central server as it is known from prior art. Therefore one of the main advantage of such a method is the fact that the track data is not transmitted to a central server in order to hand the object over from one tracker unit to a neighboring tracker unit. The system can therefore be enlarged without limits since there is no bottleneck in terms of data handling at a central server.

As briefly mentioned above, each of the sub-spaces 5, 6, 7 comprises determined spaces of interest 11, 12, 21, 22, 31, 32. The step of transmitting said track data T between said tracker units ET1, ET2, ET3 such that the tracker units ET1, ET2, ET3 will be provided with said track data T is executed while the object 1 resides in said space of interest 11, 12, 13, 21, 22, 31, 32. With regard to figure 1 this means that as soon as the object therefore crosses the border 15 between the sub-space 6 and the space of interest 12 that is part of said sub-space 6 the step of transmitting said track data T will be initiated. Once the object 1 is in said space of interest 11 it is very likely that the object 1 leaves current sub-space 6 towards a future sub-space, here towards sub-space 5. Track data T will be submitted then to future tracker unit ET1 from the current tracker unit ET2 as long as the object 1 is in the space of interest 12 of said sub-space 6 that is allocated to the current tracker unit ET2. Once the object 1 has left said space of interest 12 the step of transmitting said track data T from the tracker unit ET2 to the tracked unit ET1 will be terminated. The object 1 is then tracked by means of tracker unit ET1 whose field of view defines sub-space 5. In case the object X, 1 does not leave current sub-space 6 towards the future sub-space 5, but remains in current sub-space 5 track data T will be sent to the future tracker unit ET1 from the current tracker unit ET 2 as long as the object is within said space of interest 12 of the current sub-space 5. However, tracker unit ET1 transmits said track data T of the object 1 also to tracker unit ET2 from which the object 1 originated as long as the object 1 is in the space of interest 11 of tracker unit ET1. This has the advantage, that tracker unit ET2 will be informed in case the object moves back towards tracker unit ET2. Said track data T will be transmitted as long as the object is in said space of interest 11. As soon as it has left said space of interest 11 by crossing its border 16, the step of transmitting said track data from ET1 to ET2 will be terminated.

The physical arrangements of the tracker units ET1, ET2, ET3 is preferably such that the field of views of said tracker units ET1, ET2, ET3 overlap in overlapping spaces 8 as it is shown in figure 1 and 2. This means also that said sub-spaces 5, 6, 7 which are defined by said field of views overlap as well.

However, in other embodiments not shown in the drawings it is also possible to arrange the tracker units ET1, ET2, ET3 such that the field of views and therefore also the sub-spaces 5, 6, 7 are substantially adjacent to each other or are directly adjacent to each other.

A further embodiment can also be provided in that the physical arrangement of the tracker units ET1, ET2, ET3 is such that the said field of views and therefore also the sub-spaces 5, 6, 7 are arranged at a distances to each other. This embodiment is particularly advantageous when the risk of losing an object when it enters a future field of view can be limited. This is the case in applications when the object 1 moves along a predetermined path or along a predictable path. Here the number of tracker units can be reduced.

Reference is now made to figure 3a to 3f with which several embodiments of said spaces of interest 11, 12 are explained. Each of the figures shows two sub-spaces 5, 6 or field of views. Thereby for the sake of clarity each of the configurations is shown twice. The figure to the left shows the space of interest 12 which is allocated to sub-space 6. This space of interest 12 is shown by a gray area. The figure to the right shows the space of interest 11 which is allocated to sub-space 5. This space of interest 11 is shown by a dotted area.

Figures 3a to 3f show different embodiments of preferable configuration of spaces of interest 11 and spaces of interest 12. In further not shown embodiments it would also be possible to mix different embodiments as shown in figures 3a to 3f with each other.

Figure 3a shows that the spaces of interest 11, 12 are defined by an overlap space 100, 101 that is provided by neighbouring and partly overlapping sub-spaces 5, 6. Hence the space of interest 12 is congruent with an overlap space 101 between sub-spaces 5, 6 and the space of interest 11 is congruent with an overlap space 100 between sub-spaces 5, 6.

Figure 3b shows that the space of interest 12 is defined by a space 110 that is provided by a first space 8 that is defined by neighbouring and partly overlapping sub-spaces 5 and 6 and by a second space 112 that is part of the respective sub-space 6. Space of interest 11 is defined by space 113 that is defined by neighbouring and overlapping sub-spaces 5 and 6 and by a second space 114 that is defined by a space encompassing said first space 8 and which is part of the sub-space 5. Hence the second space 114 encompasses the first space partly within said respective sub-space 5. One can also say that space of interest 11 is an extension of overlap space 8 into sub space 5 and that space of interest 12 is an extension of overlap space 8 into sub space 6.

Figure 3c shows that the space of interest 12 is defined by a space 120 that is part of an overlap space 8 provided by neighbouring and partly overlapping sub-spaces 5 and 6, but is smaller than said overlap space 8. Space of interest 11 is defined by space 121 that is part of an overlap space 8 provided by neighbouring and partly overlapping sub-space, 6 but is smaller than said overlap space 8.

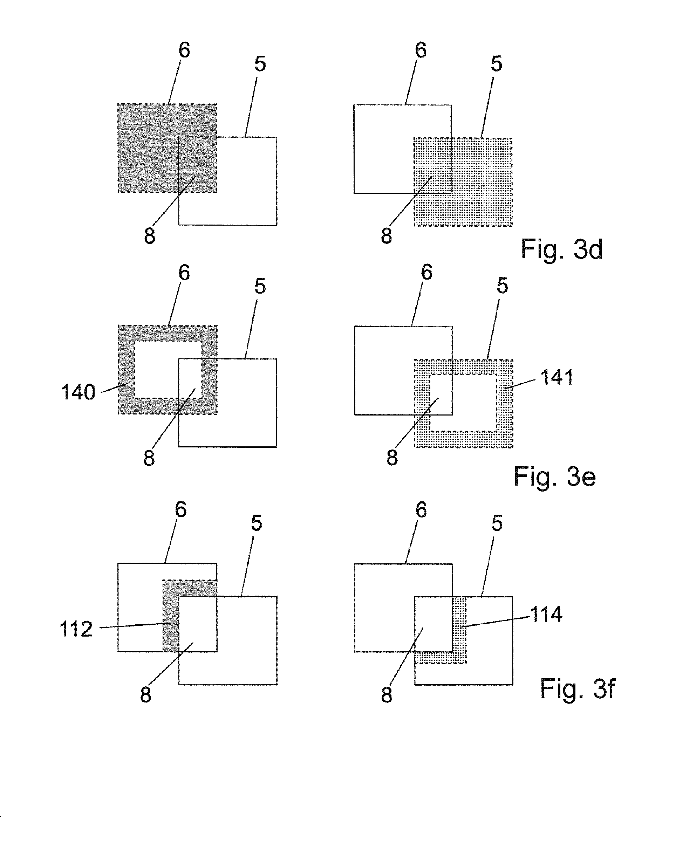

Figure 3d shows that the spaces of interest 11, 12 are congruent to said sub-spaces 5, 6. In such an embodiment the step of transmitting track data T will be executed continuously as long as the object is located within said sub-spaces 5, 6.

Figure 3e shows that the space of interest 12 is defined by a space 140 surrounding the outer border of said sub-space 6 but that is part of sub-space 6, space of interest 11 is defined by space 141 surrounding the outer border of said sub-space 5 but that is part of the sub-space 5.

Figure 3f shows that the space of interest 11 is defined by space 114 surrounding the border of said sub-space 6 inside sub-space 5. Space of interest 12 is defined by space 112 inside sub-space 6 surrounding the border towards subspace 5 not extending into the partial overlap 8 of sub-spaces 5, 6. In this configuration data T are transmitted from the current to the future tracker unit up until the moment object 1 has entered the partial overlap space 8.

In the following further optional steps of the method as described above will be explained with regard to figure 1 and 2.

Preferably the step of transmitting said track data T between said tracker units ET1, ET2, ET3 such that the tracker units ET1, ET2, ET3 will be provided with said track data T is executed continuously at regular time intervals as long as the object is in the space of interest 11, 12, 1321, 22, 31, 32. As soon as the object 1 leaves said space of interest 11, 12, 21, 22, 31, 32, said step will be terminated. Therefore said track data T is only submitted when necessary which reduces data traffic in said data connection 9.

Preferably the step of transmitting said track data T between said tracker units ET1, ET2, ET3 such that the tracker units ET1, ET2, ET3 will be provided with said track data T is executed continuously at regular time intervals as long as the object is in the sub-space 5, 6, 7. Hence the space of interest here is congruent with the sub-space 5, 6, 7 or field of view, respectively. Such an embodiment can be implemented by means of a space of interest according to figure 3d. This embodiment can be in particular advantageous when a myriad of objects is to be monitored and tracked. However in order to process the amount of data sufficient computational power is a need here in order to process the acquired data.

Preferably said track data T comprises the identity of the object 1 to be tracked, wherein said identity is assigned to the object 1 upon first appearance in said space 2 or in said subspace 5, 6, 7 respectively.

The track data T further optionally comprises for a predetermined point in time position and/or velocity and/or acceleration and/or physical properties of the object 1 to be tracked. Said parameters can then be used for further analysis with regard to the object.

The physical properties of the object 1 to be tracked are preferably chosen from the group of size and/or height and/or colour and/or shape and/or the presence of further objects which accompanies said object to be tracked and/or any other property associated with said object 1 to be tracked. Further properties are also possible.

Preferably each of the tracker units ET1, ET2, ET3 comprises a synchronisation module. The method then further comprises a step of time synchronisation between the tracker units ET1, ET2, ET3 by means of said synchronisation module.

Preferably the processing module uses a Kalman-filter to perform the tracking. However, other suitable filters may also be used.

In addition to the above mentioned elements the tracker units may also comprise an optional storage means in which the raw data from the optical element 3 and/or the acquired data D and/or the track data T is stored to be retrieved upon request. This storage means or storage unit is particularly advantageous in order to further reduce the traffic between the tracker units ET1, ET2, ET3 as the data stored can be retrieved on request only.

Said tracker units ET1, ET2, ET3 are optionally in contact by means of a data connection with at least one central database which is not shown in the drawings. Said data connection serves to transmit the acquired data or the track data T of the object to the central database. In case such central database is present, the method further comprises the steps of transmitting said raw data from the optical element 3 or said acquired data D or said track data T to said central database and of storing said raw data or said data D, T in said central database for further processing and/or further analysing.

All tracker units use the same unique ID for each track data T when storing the track data T. This means when an object enters space 2, it can be referred to by the same track ID until it leaves space 2. Particularly when a myriad of objects are to be tracked, it allows for great processing efficiency when each object is referred to by the same unique ID for the entire duration it remains in space 2.

Transmitting the data from the tracker units ET1, ET2, ET3 can be executed continuously or upon request from the database. Furthermore said step can also be executed once the object 1 enters into said space of interest 11, 12, 21, 22, 31, 32 and remains present in said space of interest 11, 12, 21, 22, 31, 32.

The method optionally further comprises the step of transmitting track data T from a tracker unit ET1, ET2, ET3 in its field of view or sub-space the object 1 entered to the tracker unit from which it has previously received the track data. With regard to figure 1 this means that first tracker unit ET1 will submit track data to the second tracker unit ET2 once the object entered into space of interest 11. This is particularly advantageous as the second tracker unit ET2 from which the object 1 originates will still be informed about the track data T. Hence the second tracker unit ET2 is in possession of the track data T which is helpful in case the object 1 moves back from the sub-space 5 towards the sub-space 6 of the second tracker unit ET2.

The step of transmitting track data T from a tracker unit ET1 in its field of view or subspace the object X, 1 entered to the tracker unit ET2 from which it has previously received the track data T is preferably executed as long as the object X, 1 remains in the space of interest 11 of the sub-space 5, 6, 7 in which it has just entered. In view of figure 1 this means that the track data T will be submitted from the first tracker unit ET1 to the second tracker unit ET2 from which the object X, 1 has been originated as long as the object X, 1 is in the space of interest 11 of the sub-space 5.

Figure 2 shows a further configuration of setting in which the herein described method can be applied. The main difference to the setting as shown in figure 1 is that in figure 2 a third tracker unit ET3 having a sub-space 7 is arranged. The embodiment of figure 2 shows in particular that the method according to the present invention is scalable very easily.

The object 1 in figure 2 is in the field of view or sub-space 6 of the second tracker unit ET2 and moves along arrow 14 towards the sub-space 7 of the third tracker unit ET3 and form there towards the sub-space 5 of the first tracker unit ET1. As soon as the object 1 moves into the space of interest 12 said track data T will be transmitted from the current tracker unit ET2 monitoring the object 1 to the future tracker units ET1. In addition, as soon as object 1 moves into the space of interest 21 said track data T will also be transmitted from the current tracker unit ET2 monitoring the object 1 to the future tracker unit ET3 such that the said future tracker unit(s) ET1, ET3 will be provided with said track data T. Therefore both future tracker units ET1 and ET3 will be provided with said track data.

All other features as described above are likewise applicable onto the setting of figure 2. With this regard it has to be mentioned that a plurality of tracker units can be used in order to observe a space 2. The number mainly depends on the physical field of view of the respective tracker unit and on the size of the space 2 under surveillance.

### LIST OF REFERENCE SIGNS

- 1: Object
- 2: defined space, sum of sub spaces 5,6,7
- 3: optical element
- 4: data acquisition unit
- 5: sub space defined by f.o.v of ET1
- 6: sub space defined by f.o.v of ET2
- 7: sub space defined by f.o.v. of ET3
- 8: overlapping space
- 9: data connection
- 10: processing module
- 11: space of interest allocated to ET1 associated with ET2
- 12: space of interest allocated to ET2 associated with ET1
- 14: arrow
- 15: border to space of interest 12
- 16: border to space of interest 11
- 21: space of interest, allocated to ET2 associated with ET3
- 22: space of interest, allocated to ET3 associated with ET2
- 31: space of interest allocated to ET1 associated with ET3
- 32: space of interest allocated to ET3 associated with ET1
- D: Data
- T: Track Data

## Claims

1. Method for tracking an object (1) in a defined space (2) with at least two tracker units (ET1, ET2, ET3), each of said tracker units (ET1, ET2) comprises an optical element (3) having a determined field of view to detect said object (1) and a data acquisition unit (4) to locate said object (1) and to acquire data (D) of the object (1) within said space (2),
wherein each of said field of view defines a sub-space (5, 6, 7) in said space (2), said space itself is provided by an aggregation of said field of views or said sub-spaces (5, 6, 7), respectively;
wherein said method comprises the step of acquiring data (D) of the object (1) to be tracked by means of said tracker units (ET1, ET2, ET3), particular by a current tracker unit (ET1, ET2, ET3), **characterised in that**
said tracker units (ET1, ET2, ET3) are connected with each other by means of a data connection (9) and each of said tracker units (ET1, ET2, ET3) further comprises a processing module (10) to process said data (D) acquired by the respective tracker unit (ET1, ET2, ET3), in particular by said data acquisition unit (4) and **in that** said method further comprises the steps of:
- processing said acquired data (D) by said processing modules (10) in order to obtain or to update track data (T) referring to track properties of said object (1) to be tracked;
- transmitting said track data (T) from the current tracker unit (ET2) monitoring the object (1) directly to at least one of the future tracker units (ET1, ET3) such that the said future tracker unit(s) (ET1, ET3) will be provided with said track data (T) once the object (1) enters into a space of interest (11, 12, 21, 22, 31, 32).

2. Method according to claim 1, **characterised in that** each of the sub-spaces (5, 6, 7) comprises a determined space of interest (11, 12, 21, 22, 31, 32), in particular for each tracker unit whose field of view is adjacent to its own field of view and **in that** the step of transmitting said track data (T) between said tracker units (ET1, ET2, ET3) such that the tracker units (ET1, ET2, ET3) will be provided with said track data (T) is executed once the object (1) enters into said space of interest (11, 12, 21, 22, 31, 32).

3. Method according to claim 1 or 2, **characterised in that** each of said sub-spaces (5, 6, 7) or said field of view or said tracker units (ET1, ET2, ET3) comprises at least one own and determined space of interest (11, 12, 13, 21, 22, 31, 32), which is preferably defined as being a part of the sub-space (5, 6, 7).

4. Method according to any of the preceding claims, **characterised in that** the physical arrangement of said tracker units (ET1, ET2, ET3) with respect to each other is such that
said field of views of said tracker units (ET1, ET2, ET3) overlap in overlapping spaces (8) and/or
said field of views of said tracker units (ET1, ET2, ET3) are substantially adjacent to each other or directly adjacent to each other, and/or
said field of views of said tracker units (ET1, ET2, ET3) are arranged at a distance to each other.

5. Method according to any of the preceding claims, **characterised in that** the space of interest (11, 12) is defined by
- an overlap space (100, 101) provided by neighbouring and partly overlapping sub-spaces (5, 6); or
- a space (110, 113) provided by a first space (8) that is defined by neighbouring and partly overlapping sub-spaces (5, 6) and by a second space (112, 114) that is defined by a space encompassing said first space (8) and is part of said respective sub-space (5, 6); or
- a space (120, 121) that is part of an overlap space provided by neighbouring and partly overlapping sub-spaces (5, 6) but is smaller than said overlap space; or
- a space congruent to said sub-spaces (5, 6); or
- a space (140, 141) surrounding the outer border of said sub-spaces but that is part of the sub-space (5, 6); or
- a space (112, 114) surrounding the outer border of neighbouring and partially overlapping space (6, 5) but is part of said sub-space (5, 6).

6. Method according to claim 1, **characterised in that** the step of transmitting said track data (T) between said tracker units (ET1, ET2, ET3) such that the tracker units (ET1, ET2, ET3) will be provided with said track data (T) is executed continuously at regular time intervals as long as the object is in the area of interest (11, 12, 21, 22, 31, 32) or in the sub-space (5, 6, 7) or in said field of view.

7. Method according to any of the preceding claims, **characterized in that** the track data (T) comprises the identity of the object (1) to be tracked, wherein said identity is assigned to the object (1) upon first appearance in said space (2) and/or **in that** the track data (T) optionally further comprises for a predetermined point in time position and/or velocity and/or acceleration and/or physical properties of the object (1) to be tracked.

8. Method according to claim 7, **characterized in that** the physical properties are chosen from the group of size and/or height and/or colour and/or shape and/or the presence of one or more further object which accompanies said object to be tracked and/or any other property associated with said object (1) to be tracked.

9. Method according to any of the preceding claims, **characterized in that** each of the tracker units (ET1, ET2, ET3) comprises a synchronisation module and **in that** the method further comprises a step of time synchronisation between the tracker units (ET1, ET2, ET3) by means of said synchronisation module.

10. Method according to any of the preceding claims, **characterized in that** the processing module uses a Kalman-filter to perform the tracking.

11. Method according to any of the preceding claims, **characterized in that** each of the tracker units comprise a storage means in which the raw data from the optical element (3) and/or the acquired data (D) and/or the track data (T) is stored to be retrieved upon request.

12. Method according to any of the preceding claims, **characterized in that** said tracker units (ET1, ET2, ET3) are in contact by means of a data connection with at least one central database, said data connection serves to transmit the raw data from the optical element (3) and/or the acquired data (D) and/or the track data (T) of the object (1) to the central database, wherein the method further comprises the steps of transmitting said acquired data (D) and/or the track data (T) to said central database and of storing said data in said central database for further processing and/or analysing.

13. Method according to any of the preceding claims, **characterized in that** the method comprises the step of transmitting track data (T) from a future tracker unit (ET1, ET2, ET3) in its field of view or sub-space (5, 6) the object (1) entered to the tracker unit from which the object (1) originated and from which it has previously received the track data (T).

14. Method according to any of the preceding claims, **characterized in that** the method comprises the step of transmitting track data (T) to a tracker unit (ET1, ET2, ET3) in its field of view the object (1) entered to any other tracker unit (ET1, ET2, ET2) expect to the tracker unit (ET1, ET2, ET3) whose field of view or sub-space (5, 6, 7) the object (1) has left.

15. System for the implementation of a method according to any of the preceding claims, **characterized in that** said system comprises at least two tracker units (ET1, ET2, ET3) to track an object.
